# EUROPEAN PATENT SPECIFICATION

(11) **EP 3 889 445 B1**
(45) Date of publication and mention of the grant of the patent: **25.02.2026**
(21) Application number: 21166477.6
(22) Date of filing: 31.03.2021
(51) Int. Cl.: F16B 1/00, A47B 95/04, F16B 15/02, F16B 23/00, F16B 25/00, F16B 41/00, F16B 35/06, F16B 5/02

(54) **A CONNECTION ELEMENT WITH A PROFILED HEAD**
VERBINDUNGSELEMENT MIT EINEM PROFILIERTEN KOPF
ÉLÉMENT DE CONNEXION DOTÉ D'UNE TÊTE PROFILÉE

(30) Priority: 31.03.2020 NL 2025250
(43) Date of publication of application: 06.10.2021
(73) Proprietor: LBM Europe B.V., 3893 JA Zeewolde (NL)
(72) Inventor: VAN DER LEM, Haakon Friso, 3893 JA Zeewolde (NL)
(74) Representative: Plaggenborg, Menko Bernard

(56) References cited:
- BE-A- 542 213
- CN-Y- 2 245 631
- DE-A1- 19 928 431
- DE-U1- 202016 103 748
- FR-A1- 2 958 352
- GB-A- 2 240 153
- GB-A- 2 261 483
- US-A1- 2003 075 027
- ANONYMOUS: "Aku- Line Traebeton. Produkt- og montagevejledning", HORNEMAN INTERIOR, 1 February 2020 (2020-02-01), pages 1 - 4, XP055799864, Retrieved from the Internet <URL:https://dlh.com/wp-content/uploads/2020/06/HORNEMAN-TRAEBETON-FOLDER-A4-JAN20-PRINT.pdf> [retrieved on 20210429]
- ANONYMOUS: "DDS plus betonschroef", HERAKLITH, 1 June 2018 (2018-06-01), pages 1 - 8, XP055799860, Retrieved from the Internet <URL:https://heraklith.be/houtwol-producten/dds-plus-betonschroef-heraklith> [retrieved on 20210429]

## Description

The present invention relates to a fastening element with a profiled head according to the preamble of claim 1 and to a combination of a fastening element and a wood wool cement board according to claim 6.

Such a fastening element is known in the art. For example, screws are known for this purpose. In order to be able to feed a screw into a receiving material, a notch or cross-shaped recess is usually provided to insert a tool such as a screwdriver with which a force can be applied to the screw and it can be moved into the material with a twisting motion. An example of this is described in US2005 / 0226701A1 and EP2317159A1.

Such a screw is clearly recognizable, so that it can be easily found and its removal can take place quickly.

Sometimes, its easy visibility, and therefore its retrievability, is undesirable, especially in public spaces. To obscure the visibility, the screw can be covered with, for example, a lacquer or other curing protection, usually after the surface of the screw has been sunk into the receiving material.

It is not always possible to cover the screw with a layer of lacquer or other hardening material. It is also not always possible to insert the screw countersunk into the material.

In order to solve the problem of the visibility of the screw head, it is known in the art to place a cover cap on the screw head.

A disadvantage of these known solutions is that a second treatment is required after the screw has been fitted.

Furthermore, a screw head with a simple profiling is known from XP055799864 and XP055799860, under the trade names DDS plus concrete screw and AKU-line designskrue. These screws have such a simple, uniform profile that they are immediately recognizable when used in wood wool cement boards.

The object of the invention is now to provide an improved fastening element of the type mentioned in the preamble which does not require additional treatment.

In particular, the object of the invention is to provide a fastening element of the type mentioned in the preamble which provides a substantially invisible screw head immediately after installation.

Another object of the invention is to provide an improved fastening element that does not require separate post-processing.

Another object of the invention is to provide a fastening element that can be treated simultaneously with a finishing of the material without separate pretreatment.

In order to obtain at least one of the aforementioned goals, the invention provides a fastening element comprising the features of claim 1. This fastening element has the advantage that it is substantially invisible immediately after application. In particular when using the fastening element in a profiled material such as wood wool cement boards and similar bonded wood wool boards, that may optionally be cement-bonded boards.

The invention therefore relates to a fastening element for fastening a wood wool cement board to a receiving material, the fastening element having a head with a base surface and at least two strip-shaped elements, raised or re-cessed with respect to the base surface, to form a profiled surface, characterized in that the at least two strip-shaped elements are two strips at least partially overlapping each other, such that a surface of a first strip is elevated with respect to a sur-face of a second strip to form three profile heights of the base surface, the first strip and the second strip. As a result, the fastening element obtains a surface structure which, on the one hand, makes it easier to handle and, on the other, makes it very difficult for a tool to slide off the head. As a third advantage, this head provides an appearance that closely resembles the look of a wood wool cement board, making it unnoticeable. This not only provides an aesthetic benefit, but also reduces vandalism by not inviting people to remove the screws.

As mentioned, the three levels of profiling on the head of the fastening elements provide excellent, unsurpassed protection against slipping tools. This extensive profiling also provides an excellent camouflage that is not obtained with hitherto available fastening elements. In particular, the head according to US2005 / 022670A1 offers no protection against slipping of tools due to the very small height of a mesh-shaped profile. The virtually smooth profile of the DDS plus concrete screw and AKU-line designskrue also offers no protection against slipping tools. The three levels of profiling furthermore provide a camouflage that is not provided and suggested by the mentioned publications either.

The disclosure is applicable not only to screws but also to plugs that are hammered into the receiving material instead of being turned. The general term for the widened element is often referred to as a dish in a plug, while in a screw the most commonly used term is head. In this description, the term head is used, since the invention is directed to screws.

According to the invention the fastening element has screw thread for securing the wood wool cement board to the receiving material by means of the fastening element. This provides a quick and simple handling of the fastening element, whereby the fastening element can optionally also be removed simply and with standard tools. The fastening element according to the invention then has the general shape of a screw and thus simply meets the requirements of a circular economy.

Depending on the degree of grip desired and optionally on the size of the head of the fastening element and on the appearance of the wood wool cement board, the fastening element according to the invention can contain at least three, preferably at least four, and more preferably comprise at least five distinct strip-shaped elements. More strip-shaped elements provide improved grip of a slipping tool over a larger area of the head. Strip-shaped elements that are placed on top of each other in several layers also provide an improved grip. In addition, an improved correspondence with the appearance of a wood wool cement board is hereby obtained.

According to another preferred embodiment, the strip-shaped elements are curved elements. This provides a suitable grip against slipping of tools and, moreover, a true-to-nature resemblance to the structure of a wood wool cement board.

The fastener of the invention includes a recess for receiving a screwdriver. In particular, such a recess enables a quick mounting when using a screw thread.

In order to be able to process the fastening element with commonly available tools, it is preferred that the recess in the fastening element is a slot or a cross-shaped, polygonal or starshaped recess. The multi-sided recess can preferably be a hexagonal socket or Torx recess or a six-pointed star shape.

It is preferred that in the fastening element according to the invention at least two strips have different widths. This provides an even further improved camouflage of the head on a wood wool cement board, because strands of wood wool of a wood wool cement board usually have different widths. This also leads to greater freedom in the positioning of the strips on the head of the fastening element.

According to a further aspect, the invention relates to a combination of a fastening element according to the invention and a wood wool cement board, wherein at least one of the strip-shaped elements on the head has a width substantially corresponding to a visible width of a wood wool strand. This results in an easy-to-process material combination that can be processed quickly by a user, because the supplier can supply a matching combination of fastening element and wood wool cement board at all times. The advantages of the fastening element, as mentioned above, are also obtained with this combination.

In particular, it is preferred here that at least one wood wool cement board and at least one fastening element according to the invention are included in the combination.

The combination of a fastening element and a wood wool cement board according to the invention in particular can be used suitably when cladding a ceiling.

The invention will be explained in more detail below with reference to a drawing. The drawing shows in:
FIG. 1 a first view of a head of a fastening element according to the invention,
FIG. 2 a first view of a fastening element according to the invention,
FIG. 3 a second view of a fastening element according to the invention, and
FIG. 4 a second view of a head of a fastening element according to the invention.

In the figures, the same parts are indicated by the same reference numerals. However, the parts necessary for a practical embodiment of the invention are not all shown, for simplicity of illustration.

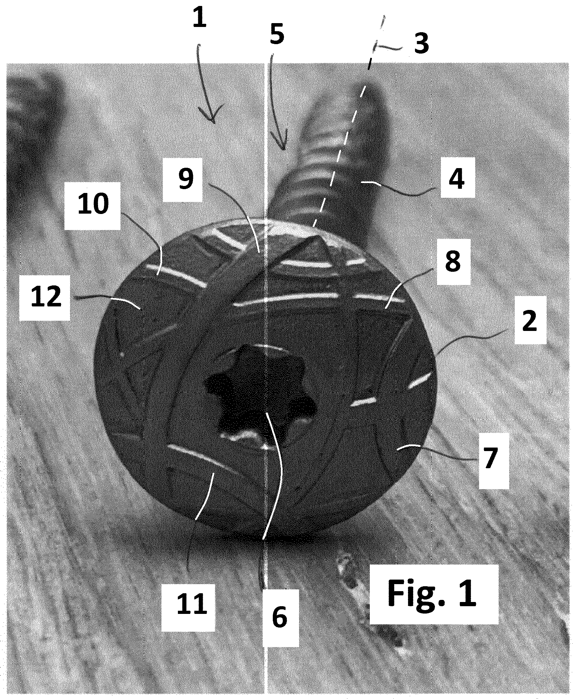

FIG. 1 shows a fastening element 1 with a head 2 and a longitudinal body 4 extending about an axis 3 and having screw thread 5. A recess 6 is provided in the head 2 for being able to rotate the fastening element 1 about the axis 3 by means of a tool (not shown) so that it can be fed into or out of a material (not shown) with a screw movement. The recess 6 has a six-pointed star shape in the embodiment shown.

The head 2 comprises strip-shaped elements 7, 8, 9, 10, 11. Some of these elements are not indicated by reference numerals in Fig. 1. Individual elements in at least some cases have different heights with respect to a base surface 12 of the head 2. As a result, at least some different elements will have different heights with respect to each other, so that a tool emerging from the recess 6 will not be able to slide off from the head 2 but will be stopped by one of the strip-shaped elements. Because at least a few different strip-shaped elements have mutually different heights, the security of holding back the tool will be very high.

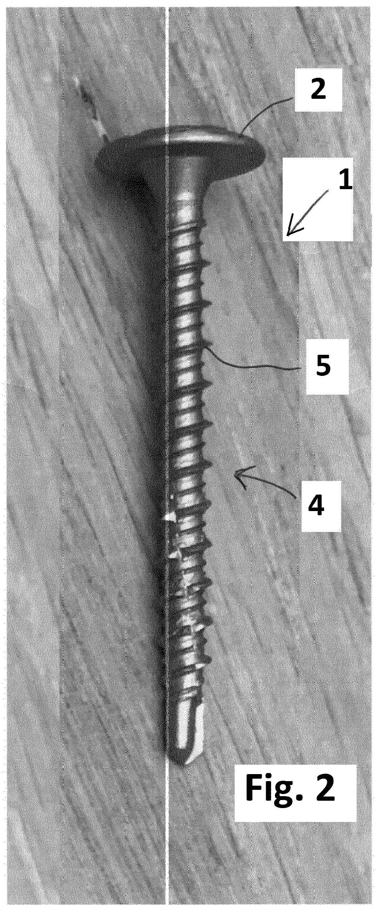

FIG. 2 shows a top view of the fastening element 1 according to FIG. 1. The head 2 is directly connected in one piece with the longitudinal body 4 having threads 5.

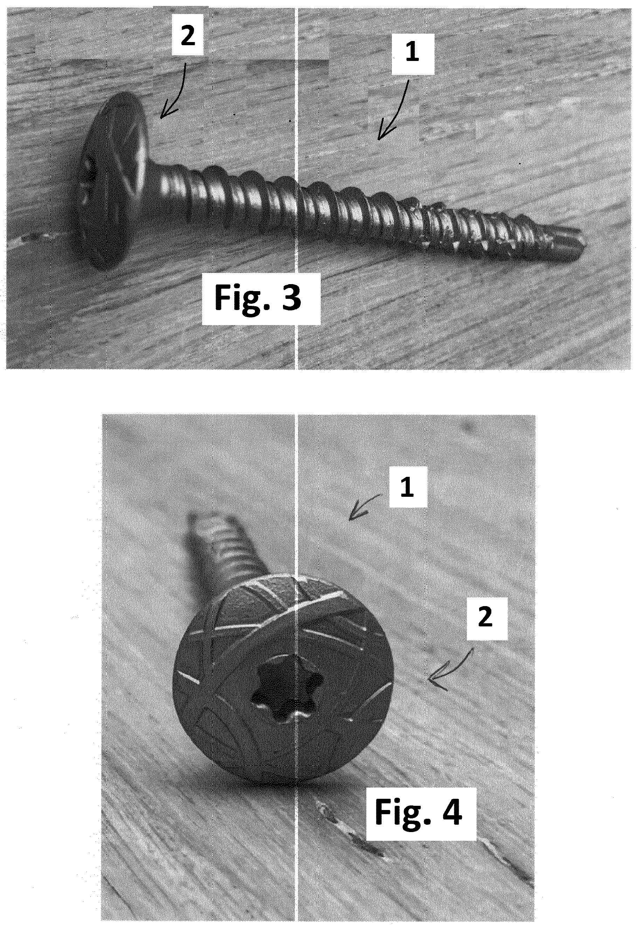

FIG. 3 shows a second view of the fastening element of FIG. 2. The head 2 with the different heights of the strip-shaped elements is clearly shown herein.

FIG. 4 finally shows a second view of a head of the fastening element according to FIG. 1, the different heights of the strip-shaped elements being clearly shown herein. The different widths of different strips are also clearly visible here.

The invention is not limited to the embodiments described above and shown in the figures. The invention is limited only by the appended claims.

## Claims

1. A fastening element for fastening a wood wool cement board to a receiving material, the fastening element having a head with a base surface and at least two strip-shaped elements, raised or re-cessed with respect to the base surface, to form a profiled surface, the fastening element comprising a longitudinal body having screw thread for securing the wood wool cement board to the receiving material, the head further comprising a recess for receiving a screwdriver, **characterized in that** the at least two strip-shaped elements are two strips at least partially overlapping each other, such that a surface of a first strip is elevated with respect to a surface of a second strip to form three profile heights of the base surface, the first strip and the second strip.

2. A fastening element according to claim 1 or 2, comprising at least three, preferably at least four, and more preferably at least five different strip-shaped elements.

3. A fastening element according to claim 1, or 2, wherein the strip-shaped elements are curved elements.

4. A fastening element according to claim 1, wherein the recess comprises a slot or a cross-shaped or polygonal recess.

5. A fastening element according to any one of claims 1 to 4, wherein at least two strips have different widths.

6. A combination of a fastening element and a wood wool cement board, comprising at least one fastening element according to any one of claims 1 to 5.

7. A combination of a fastening element and a wood wool cement board according to claim 6, wherein at least one of the strip-shaped elements on the head has a width which is substantially equivalent to a visible width of a wood wool strand.

8. A combination of a fastening element and a wood wool cement board according to claim 6 or 7, for covering a ceiling.

## Patentansprüche

1. Befestigungselement zum Befestigen einer Holzwolle-Zementplatte an einem Aufnahmematerial, worin das Befestigungselement einen Kopf mit einer Grundfläche und mindestens zwei streifenförmigen Elementen aufweist, die gegenüber der Grundfläche erhöht oder vertieft sind, um eine profilierte Oberfläche zu bilden, worin das Befestigungselement einen Längskörper mit einem Schraubgewinde zum Befestigen der Holzwolle-Zementplatte an dem Aufnahmematerial umfasst, worin der Kopf ferner eine Aussparung zum Aufnehmen eines Schraubendrehers umfasst, **dadurch gekennzeichnet, dass** die mindestens zwei streifenförmigen Elemente zwei Streifen sind, die sich zumindest teilweise überlappen, so dass eine Oberfläche eines ersten Streifens gegenüber einer Oberfläche eines zweiten Streifens erhöht ist, um drei Profilhöhen der Grundfläche, des ersten Streifens und des zweiten Streifens zu bilden.

2. Befestigungselement nach Anspruch 1 oder 2, welches mindestens drei, vorzugsweise mindestens vier und noch bevorzugter mindestens fünf verschiedene streifenförmige Elemente umfasst.

3. Befestigungselement nach Anspruch 1 oder 2, worin die streifenförmigen Elemente gekrümmte Elemente sind.

4. Befestigungselement nach Anspruch 1, worin die Aussparung einen Schlitz oder eine kreuzförmige oder polygonale Aussparung umfasst.

5. Befestigungselement nach einem der Ansprüche 1 bis 4, worin mindestens zwei Streifen unterschiedliche Breiten aufweisen.

6. Kombination aus einem Befestigungselement und einer Holzwolle-Zementplatte, welche mindestens ein Befestigungselement nach einem der Ansprüche 1 bis 5 umfasst.

7. Kombination aus einem Befestigungselement und einer Holzwolle-Zementplatte gemäß Anspruch 6, worin mindestens eines der streifenförmigen Elemente am Kopf eine Breite aufweist, die im Wesentlichen der sichtbaren Breite eines Holzwolle-Stranges entspricht.

8. Kombination aus einem Befestigungselement und einer Holzwolle-Zementplatte gemäß Anspruch 6 oder 7 zum Abdecken einer Decke.

## Revendications

1. - Elément de fixation pour fixer un panneau en laine de bois et ciment à un matériau de réception, l'élément de fixation ayant une tête avec une surface de base et au moins deux éléments en forme de bande, surélevés ou en retrait par rapport à la surface de base, pour former une surface profilée, l'élément de fixation comprenant un corps longitudinal ayant un filetage pour fixer le panneau en laine de bois et ciment au matériau de réception, la tête comprenant en outre une cavité pour recevoir un tournevis, **caractérisé par le fait que** les au moins deux éléments en forme de bande sont deux bandes se chevauchant au moins partiellement, de telle sorte qu'une surface d'une première bande est surélevée par rapport à une surface d'une seconde bande pour former trois hauteurs de profil de la surface de base, de la première bande et de la seconde bande.

2. - Elément de fixation selon la revendication 1 ou 2, comprenant au moins trois, de préférence au moins quatre, et de façon davantage préférée au moins cinq, éléments en forme de bande différents.

3. - Elément de fixation selon la revendication 1 ou 2, dans lequel les éléments en forme de bande sont des éléments incurvés.

4. - Elément de fixation selon la revendication 1, dans lequel la cavité comprend une fente ou une cavité cruciforme ou polygonale.

5. - Elément de fixation selon l'une quelconque des revendications 1 à 4, dans lequel au moins deux bandes ont des largeurs différentes.

6. - Combinaison d'un élément de fixation et d'un panneau en laine de bois et ciment, comprenant au moins un élément de fixation selon l'une quelconque des revendications 1 à 5.

7. - Combinaison d'un élément de fixation et d'un panneau en laine de bois et ciment selon la revendication 6, dans laquelle au moins l'un des éléments en forme de bande sur la tête a une largeur qui est sensiblement équivalente à une largeur visible d'un brin de laine de bois.

8. - Combinaison d'un élément de fixation et d'un panneau en laine de bois et ciment selon la revendication 6 ou 7, pour recouvrir un plafond.
